# EUROPÄISCHE PATENTANMELDUNG

(11) **EP 2 065 839 A1**
(43) Veröffentlichungstag der Anmeldung: **03.06.2009**
(21) Anmeldenummer: 08019934.2
(22) Anmeldetag: 14.11.2008
(51) Int. Cl.: G06K 19/073

(54) **Kommunikationssperre für Kontaktlos-Schnittstelle**

(30) Priorität: 20.11.2007 DE 102007055281
(71) Anmelder: Giesecke & Devrient GmbH, 81677 München (DE)
(72) Erfinder: Schröder, Sönke, 81541 München (DE)

(57) **Zusammenfassung**

Die Erfindung betrifft ein Verfahren zum Kontrollieren einer kontaktlosen Datenkommunikation zwischen einem portablen Dual-Interface-Datenträger (10) und einem Kontaktlos-Lesegerät. Dabei empfängt (310) der Datenträger (10) ein Anfragekommando von dem Kontaktlos-Lesegerät über eine Kontaktlos-Schnittstelle (70) des Datenträgers (10). Der Datenträger (10) prüft (320, 330; 380) daraufhin eine Kommunikationsbedingung und sendet (340; 400) nur dann ein Antwortkommando auf das Anfragekommando über die Kontaktlos-Schnittstelle (70) an das Kontaktlos-Lesegerät, falls die Kommunikationsbedingung erfüllt ist. Als Kommunikationsbedingung kann beispielsweise geprüft werden, ob zwei vorgegebene Kontakte (C1, C5) einer Kontakt-Schnittstelle (20) des Datenträgers (10) kurzgeschlossen sind. Mit Hilfe des Verfahrens kann eine unbeabsichtigte kontaktlose Datenkommunikation des Datenträgers (10) verhindert werden.

## Beschreibung

Die vorliegende Erfindung betrifft ein Verfahren und Vorrichtungen zum Kontrollieren einer kontaktlosen Datenkommunikation zwischen einem portablen Datenträger mit einer Kontakt-Schnittstelle zur kontaktbehafteten Datenkommunikation mit einem Kontakt-Lesegerät und einer Kontaktlos-Schnittstelle zur kontaktlosen Datenkommunikation mit einem Kontaktlos-Lesegerät, sowie einen entsprechenden Datenträger.

Derartige Datenträger sind z.B. SIM- oder USIM-Mobilfunkkarten, SD-Karten, MultiMedia-Karten (MMC) oder sonstige Chipkarten, die zusätzlich zu einer Kontakt-Schnittstelle, z.B. einem Kontaktfeld gemäß ISO/IEC 7816, noch eine Kontaktlos-Schnittstelle, z.B. in Form einer Antennenspule, umfassen. Diese Datenträger werden auch Dual-Interface-Datenträger genannt. Als Kontakt-Lesegeräte kommen beispielsweise gewöhnliche Chipkartenterminals, aber auch Telekommunikationsendgeräte, Handhelds und dergleichen in Frage. Eine kontaktbehaftete Datenkommunikation kann dann z.B. gemäß dem T=0 oder T=1 Protokoll oder dem USB-Protokoll durchgeführt werden. Eine kontaktlose Datenkommunikation, mittels derer z.B. Bezahlvorgänge im öffentlichen Personennahverkehr durchgeführt werden können, kann etwa gemäß einem Kommunikationsprotokoll gemäß ISO/IEC 14443-4 erfolgen.

Der Datenträger verfügt in der Regel über keine eigene Energieversorgung und wird zum Betreiben während der Datenkommunikation von dem jeweiligen Kontakt- oder Kontaktlos-Lesegerät mit Energie versorgt. Bei der kontaktlosen Datenkommunikation bezieht der Datenträger die Energie aus einem elektromagnetischen Feld, welches von dem Kontaktlos-Lesegerät zu diesem Zweck und zum Zweck der Datenübertragung erzeugt wird. In der Regel ist es also zur kontaktlosen Datenkommunikation ausreichend, dass der Datenträger in das von dem Kontaktlos-Lesegerät erzeugte Feld eingeführt wird. Dadurch entstehen Manipulationsrisiken, da es möglich ist, dass ein Datenträger versehentlich oder unbeabsichtigt in ein Feld eines Kontaktlos-Lesegeräts eingebracht wird, wenn sich der Datenträger beispielsweise noch in der Tasche des Benutzers oder in einem Telekommunikationsendgerät befindet. Auch ein gezielter Manipulationsversuch mittels eines tragbaren Kontaktlos-Lesegeräts, welches an dem Datenträger vorbeigeführt wird, ist möglich. In diesen Fällen kann es zu einer vom Benutzer unerwünschten kontaktlosen Datenkommunikation kommen.

Um eine solche unerwünschte kontaktlose Datenkommunikation zu verhindern, kann der Datenträger z.B. eine Taste oder einen Schalter umfassen, mittels dessen mechanisch die Funktionalität zur kontaktlose Datenkommunikation deaktiviert werden kann. Dies verteuert jedoch den Datenträger und ist für solche Datenträger, die z.B. in Telekommunikationsendgeräte eingesetzt werden, nicht realisierbar.

Alternativ kann der Datenträger geeignet abgeschirmt werden, wenn keine kontaktlose Datenkommunikation erwünscht ist. Dazu kann beispielsweise eine Schutzhülle dienen, die den Datenträger umgibt und diesen mittels einer Metallschicht gegen das elektromagnetische Feld des Kontaktlos-Lesegeräts abschirmt. Ähnliche Schutzschichten können auch in Telekommunikationsendgeräten vorgesehen sein. Eine solche Lösung hat den Nachteil, dass die Abschirmung gegen starke Felder zu schwach sein kann. Weiterhin ist in Telekommunikationsendgeräten wegen andauernder Miniaturisierungsanforderungen kaum Bauraum für eine solche Schutzschicht vorhanden.

In der DE 198 55 596 A1 wird ein Dual-Interface-Datenträger beschrieben, der Speicherbereiche umfasst, in denen datenübertragungsspezifische Zugriffsbedingungen gespeichert sind. Diese Zugriffsbedingungen verhindern, dass durch eine kontaktlose Datenkommunikation auf Daten oder Anwendungen zugegriffen wird, für welche nur ein Zugriff durch eine kontaktbehaftete Datenkommunikation vorgesehen ist. Die Frage, wie eine unerwünschte kontaktlose Datenkommunikation, die auf Daten oder Anwendungen zugreift, die für eine kontaktlose Datenkommunikation vorgesehen sind, verhindert werden kann, wird in der DE 198 55 596 A1 nicht behandelt.

Demnach ist es die Aufgabe der vorliegenden Erfindung, ein Verfahren und Vorrichtungen zum Verhindern einer unbeabsichtigten kontaktlosen Datenkommunikation eines Dual-Interface-Datenträgers mit einem Kontaktlos-Lesegerät vorzuschlagen.

Diese Aufgabe wird durch ein Verfahren, einen portablen Datenträger und Vorrichtungen mit den Merkmalen der unabhängigen Ansprüche gelöst. Vorteilhafte Ausgestaltungen und Weiterbildungen sind in den abhängigen Ansprüchen angegeben.

Bei dem erfindungsgemäßen Verfahren zum Kontrollieren einer kontaktlosen Datenkommunikation zwischen einem portablen Dual-Interface-Datenträger und einem Kontaktlos-Lesegerät empfängt der Datenträger ein Anfragekommando von dem Kontaktlos-Lesegerät über die Kontaktlos-Schnittstelle des Datenträgers. Erfindungsgemäß prüft der Datenträger daraufhin eine Kommunikationsbedingung. Der Datenträger sendet nur dann ein Antwortkommando auf das Anfragekommando über die Kontaktlos-Schnittstelle an das Kontaktlos-Lesegerät, falls die Kommunikationsbedingung erfüllt ist.

Dementsprechend umfasst ein erfindungsgemäßer Datenträger außer einer Kontakt-Schnittstelle zur kontaktbehafteten Datenkommunikation und einer Kontaktlos-Schnittstelle zur kontaktlosen Datenkommunikation eine Kommunikationseinrichtung, die eingerichtet ist, ein Anfragekommando von einem Kontaktlos-Lesegerät über die Kontaktlos-Schnittstelle zu empfangen und ein Antwortkommando über die Kontaktlos-Schnittstelle an das Kontaktlos-Lesegerät zu senden. Erfindungsgemäß umfasst der Datenträger eine Prüfeinrichtung, die eingerichtet ist, eine Kommunikationsbedingung zu prüfen und eine Aktivierungsnachricht an die Kommunikationseinrichtung zu senden, falls die Kommunikationsbedingung erfüllt ist. Die Kommunikationseinrichtung ist ihrerseits eingerichtet, das Antwortkommando nur zu senden, wenn sie die Aktivierungsnachricht von der Prüfeinrichtung empfangen hat.

Auf diese Weise kann eine unbeabsichtigte kontaktlose Datenkommunikation zwischen dem Datenträger und einem Kontaktlos-Lesegerät zuverlässig verhindert werden. Der Datenträger prüft von sich aus, ob eine Kommunikationsbedingung erfüllt ist, bevor er eine Anfrage des Kontaktlos-Lesegerätes beantwortet. Die Kommunikationsbedingung zeigt dabei an, ob eine kontaktlose Datenkommunikation beabsichtigt ist oder nicht. Als Kommunikationsbedingung kann eine beliebige, von dem Datenträger einfach zu prüfende Bedingung definiert und implementiert werden. Der Datenträger muss dazu allenfalls geringfügig angepasst werden.

Gemäß einer bevorzugten Ausführungsform prüft der Datenträger als Kommunikationsbedingung, ob zwei vorgegebene Kontakte der Kontakt-Schnittstelle des Datenträgers nicht kurzgeschlossen sind. Die Kommunikationsbedingung gilt also als nicht erfüllt, falls die vorgegebenen Kontakte kurzgeschlossen sind. Eine solche Kommunikationsbedingung ist von der Prüfeinrichtung des Datenträgers einfach zu prüfen. Die beiden vorgegebenen Kontakte können beispielsweise ein Masse-Kontakt (GND) und ein Kontakt zum Anlegen einer Versorgungsspannung (VCC) für den Datenträger sein. Im Falle einer Kontakt-Schnittstelle in Form eines Kontaktfeldes gemäß ISO/IEC 7816 also z.B. die Kontakte C5 und C1.

Es können verschiedene Bedingungseinstelleinrichtungen bereitgestellt werden, die die vorgegebenen Kontakte der Kontakt-Schnittstelle des Datenträgers bei Vorliegen von definierten Kurzschlussbedingungen kurzschließen können, um den Zustand der Kommunikationsbedingung zu ändern. Vorzugsweise sind die vorgegebenen Kontakte der Kontakt-Schnittstelle des Datenträgers derart ausgestaltet und auf dem Datenträger angeordnet, dass die vorgegebenen Kontakte von einer externen Bedingungseinstelleinrichtung kurzgeschlossen werden können, wenn der Datenträger mit der externen Bedingungseinstelleinrichtung in Wechselwirkung steht.

Als externe Bedingungseinstelleinrichtung kann beispielsweise eine Datenträgerhülle bereitgestellt werden. Die Datenträgerhülle ist derart ausgestaltet, dass die vorgegebenen Kontakte der Kontakt-Schnittstelle des Datenträgers kurzgeschlossen werden, sobald der Datenträger in die Datenträgerhülle eingeführt wird. Immer dann, wenn eine kontaktlose Datenkommunikation des Datenträgers nicht erwünscht oder nicht beabsichtigt ist, kann diese durch Einführen des Datenträgers in die Datenträgerhülle einfach und sicher verhindert werden.

Als eine weitere externe Bedingungseinstelleinrichtung kann ein mobiles Telekommunikationsendgerät bereitgestellt werden, welches eine Leseeinrichtung zum Aufnehmen des Datenträgers zur kontaktbehafteten Datenkommunikation mit dem Datenträger umfasst. Das Telekommunikationsendgerät umfasst weiterhin eine Kurzschlusseinrichtung, die eingerichtet ist, die vorgegebenen Kontakte des aufgenommenen Datenträgers kurzzuschließen, sobald eine Kurzschlussbedingung vorliegt. Das Eintreten einer solchen Kurzschlussbedingung kann ein Benutzer des Telekommunikationsendgeräts veranlassen, beispielsweise, wenn dieser das Telekommunikationsendgerät ausgeschaltet. Es ist auch möglich, dass die Kurzschlusseinrichtung die vorgegebenen Kontakte bei Vorliegen einer weiteren oder einer anderen definierten Kurschlussbedingung kurzschließt. Diese kann wiederum als Ergebnis einer weiteren oder einer anderen Aktion des Benutzers des Telekommunikationsendgeräts eintreten. Die Kurzschlusseinrichtung kann die vorgegebenen Kontakte z.B. mittels eines Kurzschlussbügels kurzschließen. Dabei wird der Datenträger beim Ausschalten des Telekommunikationsendgeräts und vor dem Kurzschließen der vorgegebenen Kontakte vollständig von der Batterie des Telekommunikationsendgeräts getrennt, falls es sich bei den vorgegebenen Kontakten der Kontakt-Schnittstelle um den VCC- und den GND-Kontakt handelt, um ein Entleeren der Batterie zu verhindern.

Auf diese Weise kann eine unbeabsichtigte kontaktlose Datenkommunikation des Dual-Interface-Datenträgers, der dauerhaft in ein Telekommunikationsendgerät eingesetzt ist, verhindert werden, während das Telekommunikationsendgerät ausgeschaltet ist.

Um eine unbeabsichtigte kontaktlose Datenkommunikation des Datenträgers auch dann zu verhindern, wenn das Telekommunikationsendgerät nicht ausgeschaltet ist, können verschiedene Mittel und Wege vorgesehen sein, die im Folgenden beschrieben werden.

Das Telekommunikationsendgerät umfasst eine Batterie zur Energieversorgung. Auch der Datenträger wird, wenn er in das Telekommunikationsendgerät eingesetzt ist, über diese Batterie mit Energie versorgt. Wenn das Telekommunikationsendgerät eingeschaltet ist und die Batterie eine ausreichende Versorgungsspannung liefert, liegt also zwischen einem Masse-Kontakt (GND) der Kontakt-Schnittstelle des Datenträgers und dem Kontakt, der zum Anlegen der Versorgungsspannung (VCC) dient, eine messbare Spannung an. Als eine interne Bedingungseinstelleinrichtung kann demnach in dem Datenträger eine Transistorschaltung vorgesehen sein, die die vorgegebenen Kontakte der Kontakt-Schnittstelle kurzschließt, falls zwischen den vorgegebenen Kontakten keine oder nur eine sehr geringe Spannung anliegt. Wenn die vorgegebenen Kontakte der Kontakt-Schnittstelle des Datenträgers dem GND- und dem VCC-Kontakt entsprechen, werden diese Kontakte bei dem in das Telekommunikationsendgerät eingesetzten Datenträger kurzgeschlossen, wenn die Batterie des Telekommunikationsendgeräts im Wesentlichen erschöpft ist. Somit kann eine unbeabsichtigte kontaktlosen Datenkommunikation des Datenträgers auch in diesem Fall auf einfache Weise verhindert werden.

Um eine unbeabsichtigte kontaktlose Datenkommunikation des Datenträgers in dem Fall zu verhindern, in dem der Datenträger in ein eingeschaltetes Telekommunikationsendgerät eingesetzt ist, wobei die Batterie des Telekommunikationsendgeräts eine ausreichende Versorgungsspannung liefert, sind wiederum verschiedene Lösungen möglich.

Mittels des Betriebssystems des Datenträgers kann prinzipiell eine Prioritätsregelung zwischen einer kontaktbehafteten und einer kontaktlosen Datenkommunikation getroffen werden, welche z.B. eine kontaktlose Datenkommunikation prinzipiell verbietet, solange ein Kontakt-Kommunikationsprotokoll zur kontaktbehafteten Datenkommunikation mit dem Telekommunikationsendgerät betriebsbereit ist. Eine solche Lösung erlaubt es jedoch nicht, dass auch bei eingeschaltetem Telekommunikationsendgerät mit aktiviertem Kontakt-Kommunikationsprotokoll eine beabsichtigte kontaktlose Datenkommunikation erfolgen kann. Falls die vorgegebenen Kontakte der Kontakt-Schnittstelle des Datenträgers dem GND- und dem VCC-Kontakt entsprechen, ist ein Kurzschließen der vorgegebenen Kontakte zum Verhindern einer nicht beabsichtigten kontaktlosen Datenkommunikation ohnehin nicht sinnvoll, da dies unmittelbar ein Entleeren der Batterie des Telekommunikationsendgeräts zur Folge hätte. Die nachfolgend beschriebene Ausführungsform liefert eine Lösung für den Fall, in dem der Datenträger in ein eingeschaltetes Telekommunikationsendgerät eingesetzt ist und eine gleichzeitige kontaktbehaftete und kontaktlose Datenkommunikation prinzipiell möglich sein sollen.

Beim Prüfen, ob die vorgegebenen Kontakte der Kontakt-Schnittstelle des Datenträgers nicht kurzgeschlossen sind, prüft die Prüfeinrichtung des Datenträgers zuerst, ob zwischen den vorgegebenen Kontakten keine Spannung anliegt. Das heißt, die Prüfeinrichtung prüft als Kommunikationsbedingung, ob zwischen den vorgegebenen Kontakten keine Spannung anliegt und ob die vorgegebenen Kontakte nicht kurzgeschlossen sind. Ist diese Kommunikationsbedingung erfüllt, sendet die Prüfeinrichtung die Aktivierungsnachricht an die Kommunikationseinrichtung des Datenträgers, welche, wie vorstehend beschrieben, dann das Antwortkommando an das Kontaktlos-Lesegerät sendet. Liegt zwischen den vorgegebenen Kontakten hingegen eine Spannung an, sind diese also insbesondere nicht kurzgeschlossen, so deutet diese darauf hin, dass der Datenträger in ein eingeschaltetes Telekommunikationsendgerät eingesetzt ist. Um eine kontaktlose Datenkommunikation des Datenträgers auch im diesem Fall kontrolliert zu ermöglichen, umfasst der Datenträger weiterhin eine Freigabeanfrageeinrichtung. Diese ist eingerichtet, eine Kommunikationsfreigabeanfrage an das Telekommunikationsendgerät zu senden und eine Kommunikationsfreigabeantwort auf die Kommunikationsfreigabeanfrage zu empfangen. Die Prüfeinrichtung des Datenträgers ist eingerichtet, in diesem Fall als Kommunikationsbedingung zu prüfen, ob die Kommunikationsfreigabeantwort positiv ist.

Das Telekommunikationsendgerät umfasst dementsprechend eine Anzeigeeinrichtung, eine Eingabeeinrichtung und eine Freigabeantworteinrichtung. Letztere ist eingerichtet, die Kommunikationsfreigabeanfrage von dem aufgenommenen Datenträger zu empfangen und auf der Anzeigeeinrichtung des Telekommunikationsendgeräts anzuzeigen sowie die Kommunikationsfreigabeantwort an den Datenträger zu senden, sobald ein Benutzer des Telekommunikationsendgeräts die Kommunikationsfreigabeantwort über die Eingabeeinrichtung eingegeben hat.

Auf diese Weise kann also auch eine unbeabsichtigte kontaktlose Datenkommunikation des Datenträgers mit einem Kontaktlos-Lesegerät verhindert werden, während der Datenträger in ein eingeschaltetes Telekommunikationsendgerät eingesetzt ist, dessen Batterie eine ausreichende Betriebsspannung liefert, und wobei prinzipiell eine kontaktlose und ein kontaktbehaftete Datenkommunikation gleichzeitig möglich sind. Diese Lösung ermöglicht einem Benutzer des Datenträgers große Flexibilität, da der Datenträger unter Wahrung ausreichender Sicherheitsmaßnahmen gleichzeitig zur kontaktbehafteten und kontaktlosen Datenkommunikation eingesetzt werden kann.

Ein erfindungsgemäßes System umfasst ein vorstehend beschriebenes Telekommunikationsendgerät und einen vorstehend beschriebenen portablen Datenträger, der in das Telekommunikationsendgerät eingesetzt ist.

Als erfindungsgemäßer Datenträger kommt vorzugsweise eine SIM- oder USIM-Mobilfunkkarte in Frage. Aber auch ein anderer portabler Datenträger kann erfindungsgemäß ausgestaltet sein, z.B. eine SD-Karte, eine MultiMedia-Karte, ein USB-Token und dergleichen.

Die vorliegende Erfindung wir im Folgenden mit Bezug auf die beiliegenden Zeichnungen beispielhaft beschrieben. Darin zeigen:
- Figur 1: eine bevorzugte Ausführungsform eines erfindungsgemäßen Datenträgers;
- Figur 2: eine bevorzugte Ausführungsform einer erfindungsgemäßen Datenträgerhülle, wobei der Datenträger aus Figur 1 in die Datenträgerhülle eingeführt ist;
- Figur 3: ein Telekommunikationsendgerät mit einer Leseeinrichtung zum Aufnehmen des Datenträgers aus Figur 1 sowie eine Kurzschlusseinrichtung; und
- Figur 4: schematisch den Ablauf einer bevorzugten Ausführungsform des erfindungsgemäßen Verfahrens.

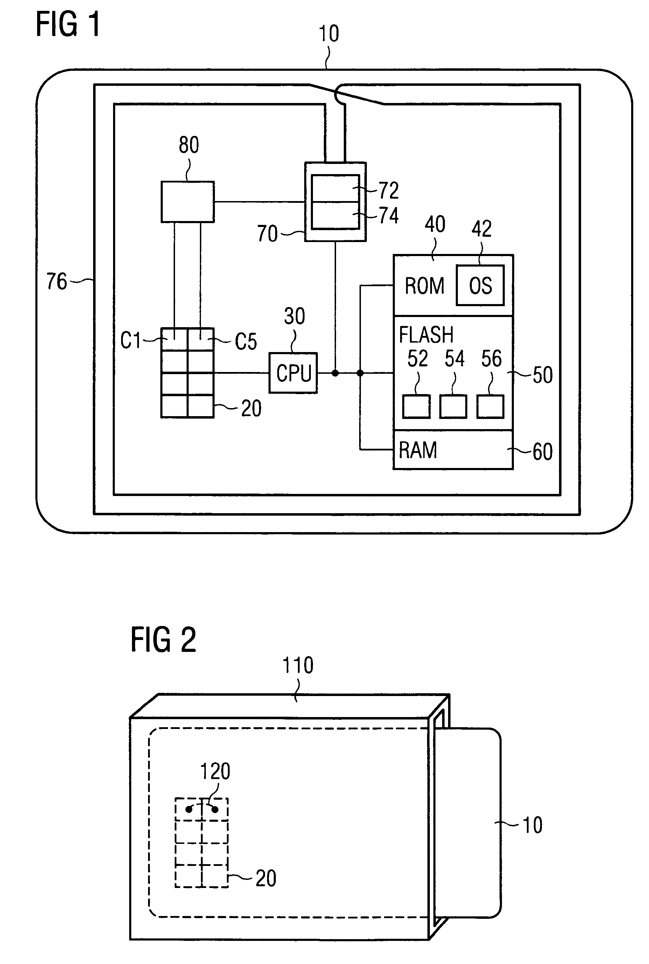

Mit Bezug auf Figur 1 umfasst ein portabler Datenträger 10, der hier als Chipkarte ausgebildet ist, eine Kontakt-Schnittstelle 20, eine Kontaktlos-Schnittstelle 70, einen Prozessor (CPU) 30, verschiedene Speicher 40, 50 und 60 sowie eine Transistorschaltung 80. Der Datenträger kann z.B. als SIM- oder USIM-Mobilfunkkarte, als SD-Karte, als MultiMedia-Karte, als USB-Token oder dergleichen ausgebildet sein.

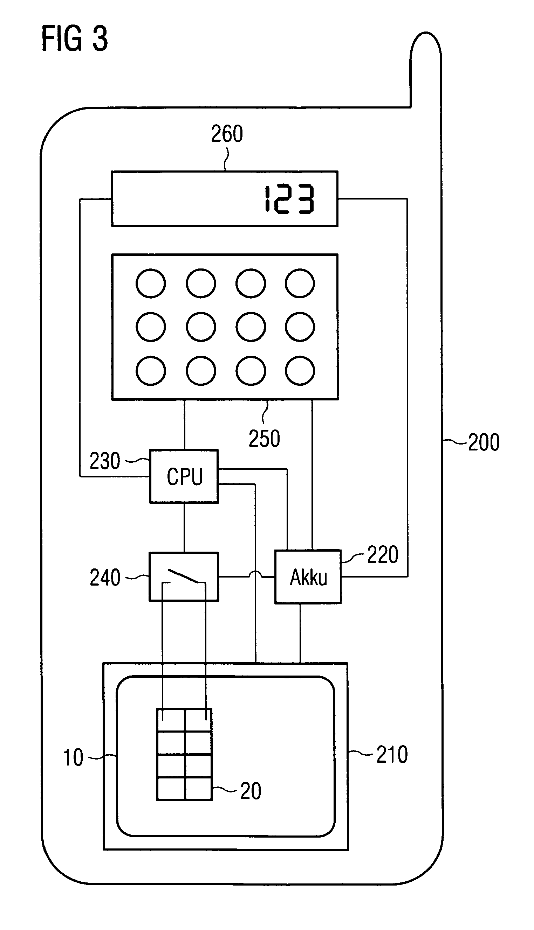

Die Kontakt-Schnittstelle 20 dient der Chipkarte 10 zur kontaktbehafteten Datenkommunikation mit einem Kontakt-Lesegerät, z.B. einem Telekommunikationsendgerät (200) über eine Leseeinrichtung (210) (Figur. 3). Die Kontakt-Schnittstelle (20) ist als Kontaktfeld gemäß ISO/IEC 7816 ausgebildet. Der mit C1 bezeichnete Kontakt dient dem Anlegen einer Betriebsspannung VCC an die Chipkarte 10, der Kontakt C5 dient als Masse-Kontakt. Für gewöhnlich verfügt die Chipkarte über keine eigene Energieversorgung, sondern wird von einem Lesegerät mit Energie versorgt. Diese kann ein Kontakt-Lesegerät sein, wobei die Energie zur Versorgung der Chipkarte dann aus dem Stromnetz des Kontakt-Lesegeräts stammt, z.B. aus einer Batterie des Kontakt-Lesegeräts, aber auch, wie nachstehend beschrieben, ein Kontaktlos-Lesegerät. Die Kontakt-Schnittstelle 20 kann auch anders ausgebildet sein, z.B. als Kontakt-Schnittstelle nach dem SD-Standard. Eine kontaktbehaftete Datenkommunikation kann z.B. nach dem T=0 oder T=1 Protokoll oder dem USB-Protokoll durchgeführt werden.

Die Kontaktlos-Schnittstelle 70 umfasst ein Modem 72, eine Steuereinrichtung 74 und eine Antennenspule 76 und dient zur kontaktlosen Datenkommunikation mit einem Kontaktlos-Lesegerät (nicht gezeigt). Über die Antennenspule 76 kann die Chipkarte 10 auch Energie beziehen, welche die Chipkarte 10 einem elektromagnetischen Feld entnimmt, wobei das Feld von dem Lesegerät zu diesem Zweck und zum Zweck der Datenübertragung erzeugt wird. Die kontaktlose Datenkommunikation kann beispielsweise gemäß ISO/IEC 14443-4 durchgeführt werden.

Die Chipkarte 10 wird durch den Prozessor 30 gesteuert. Dieser ist mit den Schnittstellen 20 und 70 und dem nichtflüchtigen, nicht wiederbeschreibbaren ROM-Speicher 40, dem nichtflüchtigen, wiederbeschreibbaren Flash-Speicher 50 und dem flüchtigen Arbeitsspeicher (RAM) 60 verbunden. Im ROM-Speicher ist das Betriebssystem (OS) 42 der Chipkarte 10 gespeichert. Einzelne Betriebssystemroutinen oder das gesamte Betriebssystem können auch in dem Speicher 50 gespeichert sein, welcher hauptsächlich dem Speichern von Daten und Applikationen dient und auch als EEPROM-Speicher oder dergleichen ausgebildet sein kann.

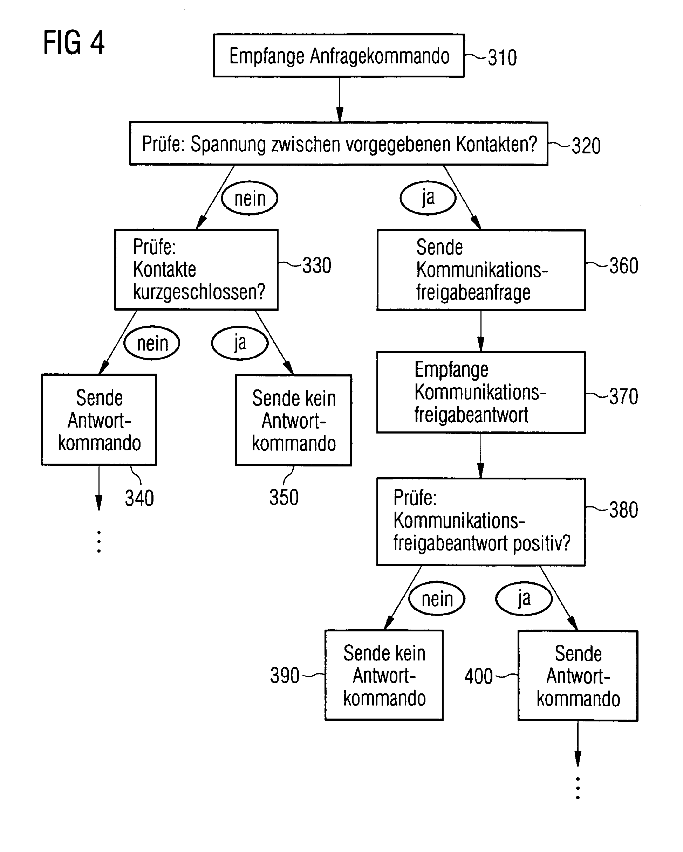

In dem Speicher 50 ist eine Kommunikationsapplikation 52, eine Prüfapplikation 54 und eine Freigabeanfrageapplikation 56 gespeichert. Die Kommunikationsapplikation 52 kontrolliert die kontaktlose Datenkommunikation der Chipkarte 10 mit einem Kontaktlos-Lesegerät. Sie ist eingerichtet, ein Anfragekommando eines Kontakt-Loslesegeräts über die Kontaktlos-Schnittstelle 70 zu empfangen und ein Antwortkommando auf das Anfragekommando zu senden. Die Prüfapplikation 54 ist eingerichtet, wenn die Kommunikationsapplikation 52 ein Anfragekommando empfangen hat, eine definierte Kommunikationsbedingung zu prüfen und eine Aktivierungsnachricht an die Kommunikationsapplikation 52 zu senden, falls die Kommunikationsbedingung erfüllt ist. Die Kommunikationsapplikation 52 ihrerseits ist eingerichtet, das Antwortkommando nur dann an das Kontakt-Lesegerät zu senden, wenn sie die Aktivierungsnachricht von der Prüfapplikation 54 empfangen hat. Als Kommunikationsbedingung kann z.B. geprüft werden, ob die Kontakte C1 und C5 der Kontakt-Schnittstelle 20 nicht kurzgeschlossen sind. Dabei kann die Prüfapplikation 54 zusätzlich durch spezielle Hardware-Bauteile (nicht gezeigt) unterstützt werden. Die Applikationen 52, 54 und 56, ihre Interaktion sowie verschiedene Kommunikationsbedingungen werden nachstehen mit Bezug auf Figur 4 genauer beschrieben.

Die Transistorschaltung 80 ist eingerichtet, die vorgegebenen Kontakte C1 und C5 kurzzuschließen, wenn zwischen diesen beiden Kontakten C1 und C5 keine oder nur eine sehr geringe Spannung anliegt. Eine solche Schaltung 80 kann beispielsweise mittels eines MOSFETs ("Metal Oxid Semiconductor Field Effect Transistor") realisiert werden.

In Figur 2 ist eine Datenträgerhülle 110 gezeigt, in welche der Datenträger 10 aus Figur 1 eingeführt ist. Die Datenträgerhülle 110 umfasst eine Kurzschlusseinrichtung in Form eines Kurzschlussbügels 120, mittels dessen die Kontakte C1 und C5 der Kontakt-Schnittstelle 20 der Chipkarte 10 kurzgeschlossen werden, sobald die Chipkarte 10 in die Datenträgerhülle eingeführt wird. Empfängt die Kommunikationsapplikation 52 eine Anfragekommando von einem Kontaktlos-Lesegerät, solange sich die Chipkarte 10 in der Datenträgerhülle 110 befindet, so sendet sie kein Antwortkommando, da sie keine Aktivierungsnachricht von der Prüfapplikation 54 empfangt, da diese beim Prüfen der Kommunikationsbedingung feststellt, dass die Kommunikationsbedingung nicht erfüllt ist, da die Kontakte C1 und C5 kurzgeschlossen sind.

Mit Bezug auf Figur 3 umfasst ein Telekommunikationsendgerät 200 eine Leseeinrichtung 210 zum Aufnehmen der Chipkarte 10, eine Kurzschlusseinrichtung 240, eine Batterie 220, einen Prozessor (CPU) 230 sowie eine Eingabeeinrichtung in Form einer Tastatur 250 und eine Anzeigeeinrichtung in Form eines Displays 260.

Die Leseeinrichtung besitzt eine zu der Kontakt-Schnittstelle 20 der Chipkarte 10 komplementäre Kontakt-Schnittstelle (nicht gezeigt) und ist mit dem Prozessor 230 und der Batterie 220 verbunden. Auf diese Weise kann die Chipkarte 10, wenn sie von der Leseeinrichtung 210 aufgenommen ist, kontaktbehaftet mit dem Prozessor kommunizieren und wird dabei von der Batterie 220 mit Energie versorgt. Die Batterie 220 versorgt auch die weiteren Bauteile des Telekommunikationsendgeräts 200 mit Energie.

Der Prozessor 230 steuert das Telekommunikationsendgerät 200. Separate Speicher sowie Applikationen des Telekommunikationsendgeräts 200, die in den Speichern gespeichert sind, z.B. eine nachfolgend mit Bezug auf Figur 4 beschriebe Freigabeantwortapplikation, sind nicht gesondert gezeigt.

Mit Bezug auf Figur 4 wird im Folgenden eine bevorzugte Ausführungsform eines Verfahrens zum Kontrollieren einer kontaktlosen Datenkommunikation der Chipkarte 10 beschrieben. Mit Hilfe des Verfahrens wird verhindert, dass es nicht zu einer unbeabsichtigten kontaktlosen Datenkommunikation der Chipkarte 10 mit einem Kontaktlos-Lesegerät kommt.

Die Chipkarte 10 empfängt in Schritt 310 ein Anfragekommando eines Kontaktlos-Lesegeräts, z.B. ein Request- oder ein Wake-Up-Kommando gemäß ISO/IEC 14443.

In Schritt 320 prüft die Prüfapplikation 54, ob zwischen den Kontakten C1 und C5 der Kontakt-Schnittstelle 20 eine Spannung anliegt. Ist dies der Fall, so bedeutet dies, dass die Chipkarte 10 in das Telekommunikationsendgerät 200 eingesetzt ist, dieses eingeschaltet ist und die Batterie 220 eine ausreichende Betriebsspannung zur Versorgung der Chipkarte 10 bereitstellt. Die Kontakte C1 und C5 sind also nicht kurzgeschlossen. Die Chipkarte 10 ist zur gleichzeitigen kontaktlosen und kontaktbehafteten Datenkommunikation eingerichtet. Die nachfolgend beschriebenen Schritte verhindern eine unbeabsichtigte kontaktlose Datenkommunikation in der vorliegenden Situation.

In Schritt 360 sendet die Chipkarte 10 mittels der Freigabeanfrageapplikation 56 eine Kommunikationsfreigabeanfrage an das Telekommunikationsendgerät 200. Die Kommunikationsfreigabeanfrage wird seitens des Telekommunikationsendgeräts 200 von der Freigabeanfrageantwortapplikation empfangen und einem Benutzer des Telekommunikationsendgeräts 200 über das Display 260 angezeigt. Eine Benachrichtigung des Benutzers kann auch akustisch über einen Lautsprecher oder fühlbar durch eine Vibrationseinrichtung erfolgen. Der Benutzer kann nun entscheiden, ob die angefragte kontaktlose Datenkommunikation durchgeführt werden soll und gibt daraufhin eine entsprechende Kommunikationsfreigabeantwort über die Tastatur 250 ein. Eine Eingabe kann auch sprachgesteuert über ein Mikrofon oder auf andere geeignete Weise erfolgen. Die Freigabeantwortapplikation des Telekommunikationsendgeräts 200 sendet die eingegebene Kommunikationsfreigabeantwort an die Freigabeanfrageapplikation 56 der Chipkarte 10 weiter, und die Freigabeanfrageapplikation 56 empfängt die Kommunikationsfreigabeantwort in Schritt 370 empfängt. Es ist auch möglich, dass der Nutzer eine Kommunikationsfreigabeantwort dauerhaft oder zeitweise dauerhaft einstellt, so dass ein Eingeben der Kommunikationsfreigabeantwort nicht mehr in jedem Fall notwendig ist.

Als Kommunikationsbedingung prüft die Prüfapplikation 54 in Schritt 380, ob die Kommunikationsfreigabeantwort positiv ist. Ist dies der Fall, so sendet die Prüfapplikation 54 eine Aktivierungsnachricht an die Kommunikationseinrichtung 52 und diese sendet daraufhin in Schritt 400 das Antwortkommando, beispielsweise ein ATQ ("Answer to Request") gemäß ISO/IEC 14443, über die Kontaktlos-Schnittstelle 70 an das Kontaktlos-Lesegerät. Daraufhin kann die auf die beschriebene Weise begonnene kontaktlose Datenkommunikation zwischen der Chipkarte 10 und dem Kontaktlos-Lesegerät fortgesetzt werden.

Im gegenteiligen Fall, wenn also die Kommunikationsfreigabeantwort negativ ist, sendet die Prüfapplikation 54 keine Aktivierungsnachricht an die Kommunikationsapplikation 52 und diese sendet kein Antwortkommando an das Lesegerät, wie es in Schritt 390 angedeutet ist. Eine kontaktlose Datenkommunikation zwischen der Chipkarte 10 und dem Kontaktlos-Lesegerät kommt nicht zu Stande.

Stellt die Prüfapplikation 54 hingegen in Schritt 320 fest, dass zwischen den vorgegebenen Kontakten C1 und C5 der Kontakt-Schnittstelle der Chipkarte 10 im Wesentlichen keine Spannung anliegt, so prüft sie in Schritt 330 als zweite Teilbedingung der Kommunikationsbedingung, ob die Kontakte vorgegebenen Kontakte C1 und C5 nicht kurzgeschlossen sind.

Sind die vorgegebenen Kontakte kurzgeschlossen, ist also die Kommunikationsbedingung nicht erfüllt, so sendet die Prüfapplikation 54 keine Aktivierungsnachricht an die Kommunikationsapplikation 52 und die Kommunikationsapplikation 52 sendet demgemäß, wie in Schritt 350 angedeutet, kein Antwortkommando an das Kontaktlos-Lesegerät. Eine kontaktlose Datenkommunikation zwischen der Chipkarte 10 und dem Kontaktlos-Lesegerät kommt nicht zu Stande. Dieser Fall kann z.B. eintreten, wenn die Chipkarte 10 zwar in das Telekommunikationsendgerät 200 eingesetzt ist, dieses aber ausgeschaltet ist. Dann sind die Kontakte C1 und C5 mittels der Kurzschlusseinrichtung 240 kurzgeschlossen. Es ist auch möglich, dass die Batterie 220 des Telekommunikationsendgeräts 200 erschöpft ist und deshalb die Kontakte C1 und C5 mittels der Transistorschaltung 80 der Chipkarte 10 kurzgeschlossen sind. Es ist weiterhin möglich, dass die Chipkarte 10 in die Datenträgerhülle 110 eingeführt worden ist, wodurch die vorgegebenen Kontakte C1 und C5 durch den Kurzschlussbügel 120 kurzgeschlossen worden sind.

Stellt die Prüfapplikation 54 in Schritt 330 hingegen fest, dass die vorgegebenen Kontakte C1 und C5 nicht kurzgeschlossen sind, so ist die Kommunikationsbedingung - keine Spannung zwischen den Kontakten, Kontakte nicht kurzgeschlossen - erfüllt und die Prüfapplikation 54 sendet die Aktivierungsnachricht an die Kommunikationsapplikation 52, welche daraufhin das Antwortkommando an das Kontaktlos-Lesegerät sendet, wie es in Schritt 340 gezeigt ist. Daraufhin kann die auf die beschriebene Weise begonnene kontaktlose Datenkommunikation zwischen der Chipkarte 10 und dem Kontaktlos-Lesegerät fortgesetzt werden.

## Patentansprüche

1. Verfahren zum Kontrollieren einer kontaktlosen Datenkommunikation eines portablen Datenträgers (10) mit einer Kontakt-Schnittstelle (20) und einer Kontaktlos-Schnittstelle (70), umfassend die Schritte:
- Empfangen (310) eines Anfragekommandos von einem Kontaktlos-Lesegerät über die Kontaktlos-Schnittstelle (70) durch den Datenträger (10);
- Senden (340; 400) eines Antwortkommandos auf das Anfragekommando durch den Datenträger (10) an das Kontaktlos-Lesegerät über die Kontaktlos-Schnittstelle (70);
**gekennzeichnet durch** den Schritt des
- Prüfens (320, 330; 380) einer Kommunikationsbedingung **durch** den Datenträger (10), ob zwei vorgegebene Kontakte (C1, C5) der Kontakt-Schnittstelle (20) des Datenträgers (10) nicht kurzgeschlossen sind und wobei das Antwortkommando nur gesendet wird, falls die Kommunikationsbedingung erfüllt ist.

2. Verfahren nach Anspruch 1, **dadurch gekennzeichnet, dass** die vorgegebenen Kontakte (C1, C5) der Kontakt-Schnittstelle (20) von einer internen Bedingungseinstelleinrichtung in Form einer Transistorschaltung (80) des Datenträgers (10) kurzgeschlossen werden, falls zwischen den vorgegebenen Kontakten (C1, C5) keine oder nur eine sehr geringe Spannung anliegt.

3. Verfahren nach Anspruch 1 oder 2, **dadurch gekennzeichnet, dass** die vorgegebenen Kontakte (C1, C5) der Kontakt-Schnittstelle (20) des Datenträgers (10) von einer externen Bedingungseinstelleinrichtung in Form einer Datenträgerhülle (110) kurzgeschlossen werden, sobald der Datenträger (10) in die Datenträgerhülle (100) eingeführt wird.

4. Verfahren nach einem der Ansprüche 1 bis 3, **dadurch gekennzeichnet, dass** die vorgegebenen Kontakte (C1, C5) der Kontakt-Schnittstelle (20) des Datenträgers (10) von einer externen Bedingungseinstelleinrichtung in Form eines Telekommunikationsendgeräts (200) auf Veranlassung eines Benutzers des Telekommunikationsendgeräts (200) kurzgeschlossen werden, sofern der Datenträger (10) in das Telekommunikationsendgerät (200) eingesetzt ist.

5. Verfahren nach Anspruch 4, **dadurch gekennzeichnet, dass** die vorgegebenen Kontakte (C1, C5) der Kontakt-Schnittstelle (20) eines in das Telekommunikationsendgerät (200) eingesetzten Datenträgers (10) kurzgeschlossen werden, wenn das Telekommunikationsendgerät (200) ausgeschaltet wird.

6. Verfahren nach einem der Ansprüche 3 bis 5 , **dadurch gekennzeichnet, dass** die vorgegebenen Kontakte (C1, C5) der Kontakt-Schnittstelle (20) mittels eines Kurzschlussbügels (120) kurzgeschlossen werden.

7. Verfahren nach einem der Ansprüche 1 bis 6, **dadurch gekennzeichnet, dass** der Datenträger (10) als Kommunikationsbedingung prüft, ob zwischen den vorgegebenen Kontakten (C1, C5) der Kontakt-Schnittstelle (20) keine Spannung anliegt (320) und ob die vorgegebenen Kontakte (C1, C5) der Kontakt-Schnittstelle (20) nicht kurzgeschlossen sind (330).

8. Verfahren nach einem der Ansprüche 4 bis 6 und 7, **dadurch gekennzeichnet, dass** der Datenträger (10), falls zwischen den vorgegebenen Kontakten (C1, C5) der Kontakt-Schnittstelle (20) eine Spannung anliegt,
- eine Kommunikationsfreigabeanfrage an das Telekommunikationsendgerät (200) sendet (360), in das der Datenträger (10) eingesetzt ist; und
- eine Kommunikationsfreigabeantwort von dem Telekommunikationsendgerät (200) auf die Kommunikationsfreigabeanfrage empfängt (370); und
- als Kommunikationsbedingung prüft (380), ob die Kommunikationsfreigabeantwort positiv ist.

9. Portabler Datenträger (10), umfassend eine Kontakt-Schnittstelle (20) und eine Kontaktlos-Schnittstelle (70) sowie eine Kommunikationseinrichtung (52), die eingerichtet ist, ein Anfragekommando von einem Kontaktlos-Lesegerät über die Kontaktlos-Schnittstelle (70) zu empfangen und ein Antwortkommando auf das Anfragekommando über die Kontaktlos-Schnittstelle (70) an das Kontaktlos-Lesegerät zu senden, **gekennzeichnet durch** eine Prüfeinrichtung (54), die eingerichtet ist, eine Kommunikationsbedingung zu prüfen und eine Aktivierungsnachricht an die Kommunikationseinrichtung zu senden, falls die Kommunikationsbedingung erfüllt ist, wobei die Kommunikationseinrichtung (52) eingerichtet ist, das Antwortkommando nur zu senden, wenn sie die Aktivierungsnachricht von der Prüfeinrichtung (54) empfangen hat.

10. Datenträger (10) nach Anspruch 9, **dadurch gekennzeichnet, dass** die Prüfeinrichtung (54) eingerichtet ist, als Kommunikationsbedingung zu prüfen, ob zwei vorgegebene Kontakte (C1, C5) der Kontakt-Schnittstelle (20) nicht kurzgeschlossen sind.

11. Datenträger (10) nach Anspruch 10, **gekennzeichnet durch** eine interne Bedingungseinstelleinrichtung in Form einer Transistorschaltung (80), die eingerichtet ist, die vorgegebenen Kontakte (C1, C5) der Kontakt-Schnittstelle (20) kurzzuschließen, falls zwischen den vorgegebenen Kontakten (C1, C5) der Kontakt-Schnittstelle (20) keine oder nur eine sehr geringe Spannung anliegt.

12. Datenträger (10) nach einem der Ansprüche 9 bis 11, **dadurch gekennzeichnet, dass** die vorgegebenen Kontakte (C1, C5) der Kontakt-Schnittstelle (20) derart ausgestaltet und auf dem Datenträger (10) angeordnet sind, dass die Kontakte (C1, C5) von einer externen Bedingungseinstelleinrichtung, insbesondere von einem Telekommunikationsendgerät (200) oder von einer Datenträgerhülle (110), kurzgeschlossen werden können, wenn der Datenträger (10) mit der externen Bedingungseinstelleinrichtung in Wechselwirkung steht.

13. Datenträger (10) nach einem der Ansprüche 9 bis 12, **dadurch gekennzeichnet, dass** die Prüfeinrichtung (54) eingerichtet ist, als Kommunikationsbedingung zu prüfen, ob zwischen den vorgegebenen Kontakten (C1, C5) der Kontakt-Schnittstelle (20) keine Spannung anliegt und ob die vorgegebenen Kontakte (C1, C5) der Kontakt-Schnittstelle (20) nicht kurzgeschlossen sind.

14. Datenträger (10) nach Anspruch 13, **gekennzeichnet durch** eine Freigabeanfrageeinrichtung (56), die eingerichtet ist, falls zwischen den vorgegebenen Kontakten (C1, C5) der Kontakt-Schnittstelle (20) eine Spannung anliegt, eine Kommunikationsfreigabeanfrage über die Kontakt-Schnittstelle (20) an ein Telekommunikationsendgerät (200), in welches der Datenträger (10) eingesetzt ist, zu senden und eine Kommunikationsfreigabeantwort auf die Kommunikationsfreigabeanfrage von dem Telekommunikationsendgerät (200) zu empfangen, und **dadurch**, dass die Prüfeinrichtung (54) eingerichtet ist, falls zwischen den vorgegebenen Kontakten (C1, C5) der Kontakt-Schnittstelle (20) eine Spannung anliegt, als Kommunikationsbedingung zu prüfen, ob die Kommunikationsfreigabeantwort positiv ist.

15. Telekommunikationsendgerät (200), umfassend eine Leseeinrichtung (210) zum Aufnehmen eines portablen Datenträgers (10) nach einem der Ansprüche 10 bis 15 zur kontaktbehafteten Datenkommunikation mit dem Datenträger (10) über die Kontakt-Schnittstelle (20) des Datenträgers (10), **gekennzeichnet durch** eine Kurzschlusseinrichtung (240), die eingerichtet ist, die vorgegebenen Kontakte (C1, C5) der Kontakt-Schnittstelle (20) des in der Leseeinrichtung (210) aufgenommenen Datenträgers (10) kurzzuschließen, sobald eine Kurzschlussbedingung eintritt.

16. Telekommunikationsendgerät (200) nach Anspruch 15, **dadurch gekennzeichnet, dass** die Kurzschlusseinrichtung (240) eingerichtet ist, die vorgegebenen Kontakte (C1, C5) der Kontakt-Schnittstelle (20) kurzzuschließen, sobald als Kurzschlussbedingung eintritt, dass das Telekommunikationsendgerät (200) ausgeschaltet wird.

17. Telekommunikationsendgerät (200) nach Anspruch 15 oder 16, **gekennzeichnet durch** eine Anzeigeeinrichtung (260), eine Eingabeeinrichtung (250) und eine Freigabeantworteinrichtung, wobei die Freigabeantworteinrichtung eingerichtet ist, eine Kommunikationsfreigabeanfrage von dem aufgenommenen Datenträger (10) zu empfangen und auf der Anzeigeeinrichtung (260) des Telekommunikationsendgeräts (200) für einen Benutzer anzuzeigen und eine Kommunikationsfreigabeantwort auf die Kommunikationsfreigabeanfrage an den Datenträger (10) zu senden, sobald ein Benutzer des Telekommunikationsendgeräts (200) die Kommunikationsfreigabeantwort über die Eingebeeinrichtung (250) eingegeben hat.

18. Telekommunikationsendgerät (200) nach einem der Ansprüche 15 bis 17, **dadurch gekennzeichnet, dass** die Kurzschlusseinrichtung (240) eingerichtet ist, die vorgegebenen Kontakte (C1, C5) der Kontakt-Schnittstelle (20) mittels eines Kurzschlussbügels kurzzuschließen.

19. Datenträgerhülle (110), eingerichtet zum Aufnehmen eines portablen Datenträgers (10) nach einem der Ansprüche 9 bis 14, **gekennzeichnet durch** eine Kurzschlussvorrichtung (120), die eingerichtet ist, die vorgegebenen Kontakte (C1, C5) der Kontakt-Schnittstelle (20) des Datenträgers (10) kurzzuschließen, sobald der Datenträger (10) in die Datenträgerhülle (110) eingeführt wird.

20. System, umfassend ein Telekommunikationsendgerät (200) nach einem der Ansprüche 15 bis 18 und einen in das Telekommunikationsendgeräts (200) eingesetzten portablen Datenträger (10) nach einem der Ansprüche 9 bis 14.
